# EUROPÄISCHE PATENTSCHRIFT

(11) **EP 2 619 931 B1**
(45) Veröffentlichungstag und Bekanntmachung des Hinweises auf die Patenterteilung: **12.04.2017**
(21) Anmeldenummer: 11781482.2
(22) Anmeldetag: 31.10.2011
(51) Int. Cl.: H04B 13/00, F17D 5/00

(54) **PIPELINESYSTEM UND VERFAHREN ZUM BETREIBEN EINES PIPELINESYSTEMS**
PIPELINE SYSTEM AND METHOD FOR OPERATING A PIPELINE SYSTEM
SYSTÈME DE PIPELINES ET PROCÉDÉ POUR FAIRE FONCTIONNER UN SYSTÈME DE PIPELINES

(30) Priorität: 30.11.2010 DE 102010062191
(43) Veröffentlichungstag der Anmeldung: 31.07.2013
(73) Patentinhaber: Siemens Aktiengesellschaft, 80333 München (DE)
(72) Erfinder: SOLLACHER, Rudolf, 84174 Eching (DE); WUCHENAUER, Thomas, 89182 Bernstadt (DE)
(86) Internationale Anmeldenummer: PCT/EP2011/069129
(87) Internationale Veröffentlichungsnummer: WO 2012/072355

(56) Entgegenhaltungen:
- WO-A1-2007/011082
- WO-A2-2009/022286

## Beschreibung

Die Erfindung betrifft ein Pipelinesystem und ein Verfahren zum Betreiben eines solchen Pipelinesystems. Das Pipelinesystem umfasst zumindest eine elektrisch leitende Pipeline, die mit dem Erdboden in Verbindung steht, und die gegenüber dem Boden isoliert ist. Das Pipelinesystem umfasst ferner ein Kathodenschutzsystem (Cathode Protection System, CPS), das eine Anzahl an im Boden angeordneten Erdstäben umfasst, die jeweils elektrisch mit dem Boden verbunden sind und elektrisch mit der Pipeline gekoppelt sind. Schließlich umfasst das Pipelinesystem ein Kommunikationssystem mit mehreren Kommunikationseinrichtungen, wobei für eine Kommunikation zwischen den Kommunikationseinrichtungen Daten über die Pipeline übertragbar sind.

Pipelines zum Transport von Gasen oder Flüssigkeiten über eine lange Strecke werden üblicherweise im Erdboden vergraben. Die größte Gefahr für die Beschädigung der Pipeline geht von Baumaßnahmen, Diebstahl, Erdbeben oder Erdrutschen aus. Als größte Gefahr haben sich hierbei Baumaßnahmen herausgestellt, bei denen der Erdboden aufgegraben wird, so dass bei Unkenntnis des Vorhandenseins der Pipeline diese beschädigt werden könnte. Die Betreiber der Pipelines versuchen dieser Gefahr durch entsprechende Überwachungsmaßnahmen entgegenzuwirken. Je nach technischer Ausgestaltung der Überwachungsmaßnahme wird dabei nicht nur die Pipeline selbst, sondern auch ein benachbarter Bereich der Pipeline überwacht.

Die Schwierigkeit bei der Überwachung einer Pipeline besteht einerseits darin, dass potentiell gefährliche Ereignisse von anderen unkritischen Ereignissen unterschieden werden müssen. Darüber hinaus besteht der Wunsch, dass die Überwachungsvorrichtung für einen Nutzer von außen nicht erkenntlich ist, um den Diebstahl von Komponenten der Überwachungsvorrichtung zu vermeiden.

Eine Pipeline kann sich über mehrere hundert oder mehrere tausend Kilometer erstrecken. Typischerweise sind in Abständen von etwa 150 km Pumpstationen und in Abständen von etwa 25 bis 30 km Ventilstationen vorgesehen. Sowohl die Pump- als auch die Ventilstationen sind an ein Kommunikationsnetzwerk angeschlossen, über das die Überwachung betreffende Daten an ein Kontrollzentrum übertragen werden.

Überwachungsvorrichtungen sind in unterschiedlichen Ausprägungen bekannt. Beispielsweise können hierfür Mikrophone eingesetzt werden, deren Ausgangssignale auf Muster für kritische Ereignisse untersucht werden. Alternativ kann eine Videoüberwachung der Pipeline unter Nutzung von sichtbarem Licht oder Infrarotstrahlung erfolgen. Nachteilig ist, dass die Mikrophone und Videokameras oberhalb des Erdbodens angeordnet werden müssen. Aus diesem Grund besteht jedoch die Gefahr, dass diese durch Vandalismus beschädigt oder gestohlen werden können. Darüber hinaus benötigen die Überwachungskomponenten eine externe Stromversorgung, die entweder in Gestalt von Batterien bzw. Akkumulatoren oder Solarzellen bereitgestellt werden kann. Batterien bzw. Akkumulatoren müssen jedoch in regelmäßigen Abständen ausgetauscht werden, wodurch die Wartung der Überwachungsvorrichtung teuer ist. Das Vorsehen einer kabelgebundenen Stromversorgung, beispielsweise parallel zur Pipeline, ist lediglich beim Verlegen der Pipeline wirtschaftlich durchzuführen. Ein nachträgliches Aufgraben des Erdbodens für eine separate Stromversorgung der Überwachungseinheiten ist wirtschaftlich nicht zu vertreten.

Die Verwendung oberirdisch angeordneter Überwachungseinheiten bringt andererseits den Vorteil mit sich, dass eine Kommunikation mit einer zentralen Überwachungseinheit der Überwachungsvorrichtung auf einfache Weise durch drahtlose Kommunikationstechniken realisiert werden kann. Die Verwendung leitungsgebundener Kommunikationstechniken ist insbesondere bei der nachträglichen Installation einer Überwachungsvorrichtung mit hohen Kosten verbunden.

Die Verwendung von seismischen Sensoren, welche nahe der Pipeline im Erdboden angeordnet sind, bringt den Vorteil mit sich, dass die jeweiligen Überwachungseinheiten von außen nicht erkennbar und damit gegen Vandalismus und Diebstahl besser geschützt sind. Allerdings gestalten sich die Energieversorgung und die Kommunikation mit der zentralen Überwachungseinheit schwieriger, sofern auf keine von außen sichtbaren Komponenten (z.B. Solarzellen oder Antennen) zurückgegriffen werden soll. Eine leitungsgebundene Energieversorgung sowie Kommunikation mit einer zentralen Überwachungseinrichtung erfordert andererseits wiederum das Verlegen entsprechender Leitungen im Erdboden.

Eine Überwachung der Pipeline ist ebenso unter Verwendung einer Glasfaserleitung möglich, welche entlang der Pipeline im Erdboden versenkt ist. In die Glasfaser werden Lichtpulse eingespeist, welche in dieser reflektiert werden. Im Falle einer Deformation aufgrund einer äußeren Einwirkung ergibt sich ein geändertes, detektierbares Reflexionsmuster, das aufgrund des Reflexionsmusters lokalisiert werden kann. Ein Nachteil dieser Vorgehensweise besteht darin, dass eine nachträgliche Installation ein vollständiges Aufgraben des Erdbodens entlang der Pipeline erfordert und daher mit hohen Kosten verbunden ist.

Weiterhin ist es bekannt, Satellitenaufnahmen zur Überwachung einer Pipeline zu verwenden. Allerdings ist es schwierig, die gesamte Leitungslänge einer Pipeline vollständig zu überwachen. Ein weiterer Nachteil besteht in den großen Betriebskosten.

Aus der US 6,498,568 B1 ist ein Pipeline-Kommunikationssystem bekannt, bei dem eine Kommunikation zwischen entlang der Pipeline angeordneten Kommunikationsknoten über die Pipeline selbst erfolgt. Die elektrisch leitende Pipeline, die gegenüber dem Erdboden isoliert ist, wird als Kommunikationsleiter verwendet. Dabei werden die Übertragungssignale einem Kathodenschutzsystem überlagert. Als Modulationsschema wird FFSK (Fast Frequency Shift Keying) verwendet.

Die WO-A-2007/011082 offenbart ein Pipeline-System umfassend zumindest eine elektrisch leitende Pipeline, die mit dem Erdboden in Verbindung steht; ein Kathodenschutzsystem, das eine Anzahl an im Erdboden angeordneten Erdelementen umfasst, die jeweils elektrisch mit dem Erdboden verbunden sind und elektrisch mit der Pipeline gekoppelt sind; ein Kommunikationssystem mit mehreren Kommunikationseinrichtungen, wobei für eine Kommunikation zwischen den Kommunikationseinrichtungen Daten über die Pipeline übertragbar sind, wobei die Kommunikationseinrichtungen entlang der Pipeline angeordnete Sensoreinheiten umfassen.

Es ist Aufgabe der vorliegenden Erfindung, ein Pipelinesystem anzugeben, welches einen autarken Betrieb von entlang der Pipeline angeordneten Sensoreinheiten erlaubt und mit geringerem Aufwand und geringeren Kosten als die aus dem Stand der Technik bekannten Lösungen herstellbar ist.

Diese Aufgaben werden gelöst durch ein Pipelinesystem gemäß den Merkmalen des Patentanspruches 1 sowie durch ein Verfahren zum Betreiben eines Pipelinesystems gemäß den Merkmalen des Patentanspruches 16. Vorteilhafte Ausgestaltungen ergeben sich aus den abhängigen Patentansprüchen.

Die Erfindung schafft ein Pipelinesystem, das Folgendes umfasst: Zumindest eine elektrisch leitende Pipeline, die mit dem Erdboden in Verbindung steht, und die gegenüber dem Erdboden isoliert ist; ein Kathodenschutzsystem, das eine Anzahl an im Erdboden angeordneten Erdstäben umfasst, die jeweils elektrisch mit dem Erdboden verbunden sind und elektrisch mit der Pipeline gekoppelt sind; ein Kommunikationssystem mit mehreren Kommunikationseinrichtungen, wobei für eine Kommunikation zwischen den Kommunikationseinrichtungen Daten über die Pipeline übertragbar sind. Das Pipelinesystem zeichnet sich dabei dadurch aus, dass die Kommunikationseinrichtungen entlang der Pipeline angeordnete Sensoreinheiten umfassen, welche aus dem Kathodenschutzsystem mit Energie versorgt werden.

Das erfindungsgemäße Verfahren zum Betreiben eines Pipelinesystems der oben bezeichneten Art zeichnet sich dadurch aus, dass durch die entlang der Pipeline angeordneten und als Sensoreinheiten ausgebildeten Kommunikationseinrichtungen in der Umgebung auftretende Ereignisse erfasst werden, wobei die Sensoreinheiten aus dem Kathodenschutzsystem mit Energie versorgt werden.

Ein Vorteil des erfindungsgemäßen Pipelinesystems besteht darin, dass keine separate Energieversorgung für die Kommunikationseinrichtung erforderlich ist. Für den Betrieb der Kommunikationseinrichtung sind somit keine Batterien oder Akkumulatoren notwendig, welche in regelmäßigen Abständen ausgetauscht werden müssen. Dies hilft Kosten zu sparen. Ebenso kann auf die Verwendung von Solarzellen und dergleichen verzichtet werden, welche oberirdisch angeordnet werden müssten und dadurch der Gefahr von Beschädigungen oder Diebstahl ausgesetzt sind.

Die Pipeline kann auf dem Erdboden aufliegen. Insbesondere ist die Pipeline im Erdboden vergraben oder in einem gebohrten Loch oder Tunnel im Erdboden angeordnet.

Die Daten werden über die Pipeline selbst, d.h. deren Material, übertragen. Die Übertragung könnte alternativ über das Kathodenschutzsystem oder das in der Pipeline transportierte Medium erfolgen.

In einer Ausgestaltung sind die Sensoreinheiten seismische Sensoreinheiten zur Erfassung von Bodenerschütterungen. Solche Sensoreinheiten kommen insbesondere dann zum Einsatz, wenn die Pipeline unter der Erdoberfläche angeordnet ist, z.B. im Erdboden vergraben ist. Da ein Kathodenschutzsystem typischerweise bei im Erdboden vergrabenen Pipelines von Haus aus vorgesehen ist, lässt sich das erfindungsgemäße Pipelinesystem kostengünstig bereitstellen.

Nach dem initialen Vergraben der als seismische Sensoreinheiten ausgebildeten Kommunikationseinrichtung ist - außer im Falle eines Defekts - kein weiterer Zugang zu diesen erforderlich. Dadurch, dass eine Kommunikation der Kommunikationseinrichtung über die Pipeline erfolgt, ist auch das Vorsehen separater Kommunikationsleitungen zwischen den Kommunikationseinrichtungen entbehrlich. Ebenso müssen keine oberirdisch angebrachten Antennen zur drahtlosen Kommunikation vorgesehen werden. Die Überwachung der Pipeline ist dadurch mit nur wenigen zusätzlichen Komponenten möglich.

Es ist weiterhin zweckmäßig, wenn auch die Kommunikationseinrichtungen aus dem Kathodenschutzsystem mit Energie versorgt werden.

In einer zweckmäßigen Ausgestaltung ist eine Energieversorgungseinheit einer jeweiligen Sensoreinheit elektrisch zwischen einem zugeordneten Erdstab des Kathodenschutzsystems und die Pipeline, insbesondere einer die Pipeline umgebenden Klammer des Kathodenschutzsystems, verschaltet, wobei durch die Energieversorgungseinheit Energie zur Versorgung der Sensoreinheit aus einer Spannungsdifferenz zwischen dem Erdstab und der Pipeline bzw. der Klammer gewinnbar ist. Es versteht sich, dass die die Pipeline umgebende Klammer des Kathodenschutzsystems elektrisch mit der Pipeline verbunden ist. Ebenso ist einem Fachmann bekannt, dass jedem Erdstab eine Klammer zugeordnet ist. Gemäß dieser Ausgestaltung ist vorgesehen, an jeder Stelle der Pipeline, an der eine Sensoreinheit vorgesehen werden soll, auch einen Erdstab vorzusehen. Da für die Energiegewinnung lediglich die Spannungsdifferenz und der Leitungsstrom zwischen Erdstab und Pipeline von Bedeutung sind, ist es auch nicht erforderlich, dass die Sensoreinheiten ein gemeinsames Bezugspotential aufweisen.

In einer weiteren vorteilhaften Ausgestaltung umfasst die Energieversorgungseinheit einen Energiespeicher, wie beispielsweise einen Speicherkondensator, zur temporären Energieversorgung der Sensoreinheit, insbesondere während der Übertragung einer Nachricht an eine anderen Kommunikationseinrichtung, wobei der Energiespeicher aus dem Kathodenschutzsystem aufladbar ist. Ein Vorteil dieser Ausgestaltung besteht darin, dass einerseits während Phasen, während denen die Sensoreinheit mehr Energie benötigt als aus dem Kathodenschutzsystem entnehmbar ist, die fehlende Energie aus dem Energiespeicher entnommen werden kann. Andererseits kann der Energiespeicher in den Phasen, in denen die Sensoreinheit weniger Energie benötigt als durch das Kathodenschutzsystem bereitgestellt werden kann, wieder aufgeladen werden. Als Energiespeicher kann z.B. ein Speicherkondensator oder ein Super-Cap zum Einsatz kommen. Die Energieversorgung der Sensoreinheit kann damit ohne zusätzliche Batterien oder Akkumulatoren zur Verfügung gestellt werden.

In einer weiteren vorteilhaften Ausgestaltung umfasst eine jeweilige Sensoreinheit eine Verarbeitungseinheit zur Signalverarbeitung eines aus einer Bodenerschütterung resultierenden Signals, bei der aus dem Signal Merkmalsvektoren ermittelt und anhand eines Vergleichs mit in der Sensoreinheit gespeicherten Referenzdaten klassifiziert werden, wobei bei einer Klassifikation als kritisches Ereignis eine Alarmnachricht von der Sensoreinheit ausgesendet wird. Das Aussenden der Alarmnachricht erfolgt vorzugsweise nur, wenn eine minimale Wahrscheinlichkeit für das kritische Ereignis besteht. Dadurch, dass die Sensoreinheit autark eine Verarbeitung der von ihr aufgenommenen Signale vornimmt, brauchen lediglich wenige Nachrichten an eine zentrale Verarbeitungseinheit ausgesendet werden. Im Ergebnis kann dadurch die Sensoreinheit mit einem geringeren Energiebedarf betrieben werden, im Vergleich zu einer Sensoreinheit, welche sämtliche von ihr erfassten Daten zur späteren Auswertung an die zentrale Verarbeitungseinheit übermittelt. Die Vorverarbeitung der detektierten Signale und die Übertragung lediglich relevanter Nachrichten sorgt für einen geringen Energieverbrauch, welcher es erlaubt, die Energieversorgung mit dem Kathodenschutzsystem zu realisieren.

In einer weiteren Ausgestaltung ist die Verarbeitungseinheit dazu ausgebildet, das Signal der Sensoreinheit mit einer Abtastrate von 100 Hz abzutasten. Eine seismische Sensoreinheit generiert ein zeitabhängiges Spannungssignal, das von der Beschleunigung durch eine seismische Welle abhängt. Da zur Überwachung der Pipeline lediglich geringe Frequenzen unterhalb von 10 Hz von Relevanz sind, ist eine Abtastrate von 100 Hz ausreichend, um relevante Ereignisse detektieren zu können.

Es ist weiterhin zweckmäßig, wenn zur Ermittlung der Merkmalsvektoren durch die Verarbeitungseinheit auf zumindest einen Sample-Vektor des abgetasteten Signals mit einer gegebenen Anzahl an Samples pro Sample-Fenster, insbesondere mit unterschiedlichen Sample-Fenstergrößen, eine Fourier-Transformation anwendbar ist. Die Anwendung einer Fourier-Transformation erlaubt eine nachfolgende Reduktion der Messdaten, so dass die Auswertung der Messdaten von einem herkömmlichen Mikroprozessor durchgeführt werden kann. Hierdurch ist es möglich, den Energieverbrauch einer Sensoreinheit gering zu halten. Indem auf mehrere (gleich große) Sample-Vektoren aus unterschiedlich großen Sample-Fenstern mit unterschiedlichen Größen zurückgegriffen wird, können relevante Ereignisse durch die seismische Sensoreinheit mit einer hohen Genauigkeit erkannt werden.

In einer weiteren Ausgestaltung ist zur Ermittlung der Merkmalsvektoren durch die Verarbeitungseinheit auf das abgetastete Signal eine Wavelet-Transformation anwendbar. Die Wavelet-Transformation kann vorteilhaft eingesetzt werden, da seismische Signale oftmals von sprunghafter Natur sind.

Die resultierenden, normalisierten Fourier- oder Wavelet-Koeffizienten sind durch die Verarbeitungseinheit mit in die Sensoreinheit gespeicherten Referenz-Koeffizienten vergleichbar. Die Referenz-Koeffizienten können initial in einer jeweiligen Sensoreinheit hinterlegt werden. Ebenso ist es aufgrund der Möglichkeit, mit den Sensoreinheiten kommunizieren zu können, möglich, neue oder aktualisierte Referenzdaten auch im laufenden Betrieb in die Sensoreinheiten einzuspeisen.

Um eine hohe Detektionsgenauigkeit der Sensoreinheiten zu erhalten, ist es weiterhin zweckmäßig, wenn ein Sensor der Sensoreinheit dazu ausgebildet ist, Frequenzen von maximal 10 Hz zu detektieren. Die Sensoren der Sensoreinheit können beispielsweise als Geophone ausgebildet sein, welche einen differentiellen Induktionssensor umfassen.

Es ist weiterhin vorteilhaft, wenn eine Sensoreinheit mehrere, vorzugsweise räumlich getrennt angeordnete Sensoren umfasst, deren Signale einer gemeinsamen Verarbeitungseinheit der Sensoreinheit zuführbar sind. Hierdurch ist es möglich, relevante Bodenerschütterungen von anderen "Störereignissen" zu unterscheiden, wie beispielsweise einem in der Nähe der Pipeline fahrenden Zug. Im Ergebnis kann eine höhere Detektionsgenauigkeit erzielt werden. In der Praxis hat es sich als zweckmäßig herausgestellt, wenn eine Verarbeitungseinheit mit drei räumlich getrennten Sensoren verbunden ist.

In einer weiteren zweckmäßigen Ausgestaltung sind die Sensoreinheiten in vorgegebenen Abständen zwischen zwei Zugangsknoten des Kommunikationssystems angeordnet, wobei eine von einer Sensoreinheit zu einem der Zugangsknoten übertragene Nachricht über die dazwischen liegenden Sensoreinheiten übertragen wird, wobei durch zumindest manche der dazwischen liegenden Sensoreinheiten eine Weiterleitung der Nachricht vorgenommen wird. Unter einer Weiterleitung wird dabei ein Neuaussenden der Nachricht verstanden, um eine Lesbarkeit durch den nächsten Empfänger, den Zugangsknoten oder eine weiteren dazwischen liegende Sensoreinheit, sicherzustellen. Die Kommunikation in dem Kommunikationssystem kann beispielsweise auf einem Tree Routing-Protokoll basieren.

Die Zugangsknoten sind vorzugsweise in Pump- und/oder Ventilstationen der Pipeline angeordnet und durch eine Energieversorgung der Pump- und/oder Ventilstation mit Energie versorgt. Die jeweiligen Zugangsknoten sind ihrerseits mit einer zentralen Kontrollinstanz gekoppelt, welche die bei ihr eingehenden (Alarm-)Nachrichten auswertet bzw. visualisiert.

In einer weiteren Ausgestaltung umfassen die Kommunikationseinrichtungen jeweils eine Sende-/Empfangseinheit, welche dazu ausgebildet ist, beispielsweise eine Pulsbreiten- oder Pulslagemodulation oder auch FSK (Frequency Shift Keying) zur Kommunikation zu verwenden, insbesondere CSMA-CA (Carrier Sense Multiple Access with Collision Avoidance) oder TDMA (Time Division Multiple Access) oder Low Power Listening. Die Verwendung von CSMA-CA weist den Vorteil kurzer Latenzzeiten bei geringem Datenverkehr auf. Demgegenüber ist TDMA deterministisch, weist jedoch im Vergleich zu CSMA-CA eine höhere Latenz auf. Alle drei genannten Verfahren bieten den Vorteil, eine Kommunikation mit geringem Energiebedarf zu ermöglichen, wodurch die Energieversorgung aus dem Kathodenschutzsystem ermöglicht wird.

Die Erfindung wird nachfolgend näher anhand von Ausführungsbeispielen erläutert. Es zeigen:
- Fig. 1: eine schematische Darstellung eines erfindungsgemäßen Pipelinesystems,
- Fig. 2: ein schematisches Blockdiagramm einer erfindungsgemäßen Sensoreinheit, welche aus einem Kathodenschutzsystem der Pipeline mit Energie versorgt wird,
- Fig. 3: eine schematische Darstellung eines Sensors der erfindungsgemäßen Sensorseinheit, und
- Fig. 4: ein Blockdiagramm, welches die Energieversorgung der erfindungsgemäßen Sensoreinheit illustriert.

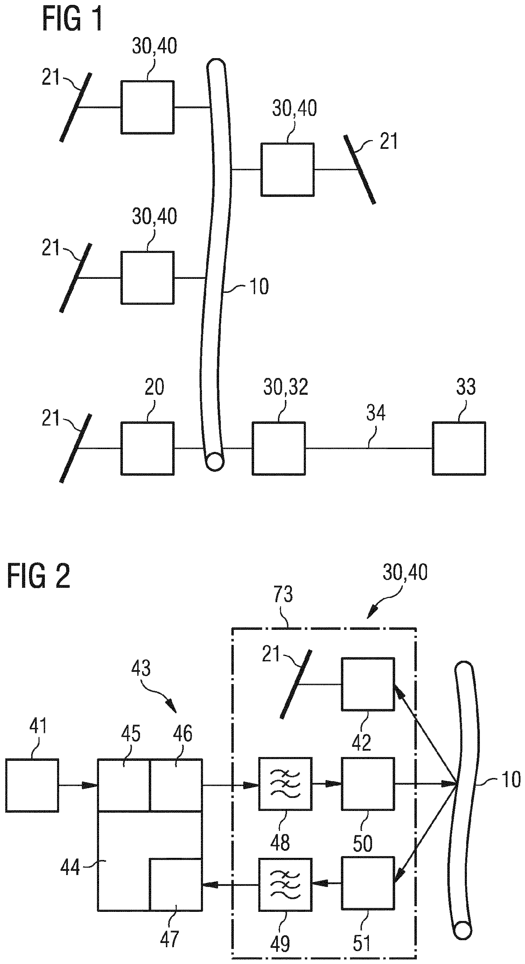

Fig. 1 zeigt in einer schematischen Darstellung ein erfindungsgemäßes Pipelinesystem. Mit dem Bezugszeichen 10 ist ein Abschnitt einer Pipeline 10 gekennzeichnet. Die Pipeline besteht aus einem elektrisch leitenden Material und ist im Erdboden vergraben und gegenüber diesem isoliert. Entlang der Pipeline 10 sind in vorgegebenen Abständen Kommunikationseinrichtungen 30 angeordnet. Die mit dem Bezugszeichen 40 versehenen Kommunikationseinrichtungen 30 stellen Sensoreinheiten dar. Mit dem Bezugszeichen 32 ist ein Zugangsknoten (Access Point) gekennzeichnet, der beispielsweise in einer Pump- oder Ventilstation (in der schematischen Darstellung nicht gezeigt) angeordnet ist. Über ein Wide Area Network (WAN) 34 ist der Zugangsknoten 32 mit einer zentralen Verarbeitungseinheit 33 (auch Control Center genannt) verbunden. Die zentrale Verarbeitungseinheit 33, der Zugangsknoten 32, wie auch alle anderen Zugangsknoten der Pipeline, sowie die Sensoreinheiten 40 sind Bestandteil eines Kommunikationssystems und können untereinander Nachrichten austauschen.

Mit den Bezugszeichen 20, 21 ist ein dem Fachmann prinzipiell bekanntes Kathodenschutzsystem dargestellt, welches mit der Pipeline 10 elektrisch verbunden ist. Die Einheit 20 ist eine Stromquelle, die einen Strom in die elektrisch leitende Pipeline 10 einspeist, welcher über Erdstäbe 21 abfließt. Jeweils ein Erdstab 21 ist mit einer Sensoreinheit 40 verbunden. Das Kathodenschutzsystem umfasst ferner in Fig. 1 nicht dargestellte Klammern, welche einem jeweiligen Erdstab 21 zugeordnet sind und die Pipeline 10 elektrisch leitend kontaktieren. Die Erdstäbe 21, die aus Edelstahl bestehen und eine Länge von etwa einem Meter aufweisen, sind im Erdboden vergraben. Aus einer zwischen der Pipeline 10 und den Erdstäben 21 bestehenden Spannungsdifferenz können die Sensoreinheiten 40 mit Energie versorgt werden. Eine Kommunikation einer Sensoreinheit 40 - gegebenenfalls über eine oder mehrere andere Sensoreinheiten 40 - mit dem Zugangsknoten 32 des Kommunikationssystems erfolgt über die Pipeline 10.

Im Nachfolgenden wird die Signal- und Informationsverarbeitung beschrieben:
Jede der Sensoreinheiten 40 umfasst mindestens einen seismischen Sensor 41, insbesondere Geophone. Mittels der seismischen Sensoren können für die Pipeline kritische Ereignisse, wie z.B. Baumaßnahmen detektiert werden, da diese seismische Wellen erzeugen. Unter einem kritischen Ereignis sind solche Ereignisse zu verstehen, welche die Pipeline potentiell schädigen können. Eine Analyse der durch die seismischen Sensoren erfassten Daten erfolgt in einer jeweiligen Sensoreinheit selbst.

Die am meisten relevanten Typen seismischer Wellen sind sog. Rayleigh-Wellen, welche die geringste Schwächung haben. Die Sensoreinheiten sind in einer Tiefe von etwa bis zu 1,5 m vergraben. Aufgrund dessen tragen nahe Oberflächenwellen den größten Anteil zur Aktivierung der Sensoren bei. Derartige Wellen klingen exponentiell mit zunehmender Distanz von deren Quelle ab. Die inverse charakteristische Abklinglänge hängt linear von der Wellenlänge und damit von der Frequenz der Welle ab. Typische Werte sind in der Größenordnung von 1/500 m/Hz. Für eine 100 Hz-Welle führt dies zu einer Abschwächung von etwa 1 dB/m, während die Abschwächung für eine 10 Hz-Welle ungefähr 0,1 dB/m beträgt. Wenn ein Sensor einer Sensoreinheit 40 einen Bereich von 500 m überwachen soll, können Wellen, welche durch eine seismische Quelle erzeugt sind, bis zu 500 dB für eine 100 Hz-Welle oder 50 dB für eine 10 Hz-Welle abgeschwächt werden. Aus diesem Grund ist es ausreichend, wenn der Sensor der Sensoreinheit 40 dazu ausgebildet ist, Frequenzen von maximal 10 Hz zu detektieren.

Ein seismischer Sensor erzeugt allgemein ein zeitabhängiges Spannungssignal in Abhängigkeit einer durch die seismischen Wellen erzeugten Beschleunigung. Nachdem lediglich geringe Frequenzen von weniger als 10 Hz für die Überwachung der Pipeline von Bedeutung sind, ist eine Abtastrate von 100 Hz ausreichend. Nach jedem Abtastintervall wird ein Verstärker der Sensoreinheit aktiviert, der ein verstärktes Spannungssignal bereitstellt. Dieses kann in einem Register mit geringem Energieverbrauch gespeichert werden. In regelmäßigen Abständen, etwa jede Minute, liest ein Mikrocontroller oder ein DSP (Digital Signal Processor) die gespeicherte Signalfolge aus und extrahiert das Leistungsspektrum oder Merkmalsvektoren, welche in einem anderen Register gespeichert sind. Die Merkmalsvektoren werden verglichen mit Merkmalsvektoren, welche für verschiedene, typische Ereignisse von seismischen Wellen repräsentativ sind. Falls eine ausreichende Ähnlichkeit mit einem kritischen Ereignis festgestellt werden kann, wird ein Alarmsignal von der betreffenden Sensoreinheit ausgesendet und an den Zugangsknoten 32 übertragen.

Geeignete Merkmalsvektoren und ihre Klassifikation können offline unter Verwendung von Maschinenlernverfahren bestimmt werden. Die Detektion und Klassifikationsleistungsfähigkeit kann durch "Online"-Lernverfahren, die auf Falschalarm und neuen Ereignissen basieren, verbessert werden. Letzteres erfordert, dass die Merkmalsvektoren zu der zentralen Verarbeitungseinheit 33 übertragen werden und dort mit Information über den Typ und die Ernsthaftigkeit des Ereignisses vervollständigt werden. Dabei ist es ebenso möglich, Aussagen über die Wahrscheinlichkeit eines Ereignisses zu erzeugen, welche als nützliche Information für die Entscheidungsfindung durch die zentrale Verarbeitungseinheit verarbeitet werden kann.

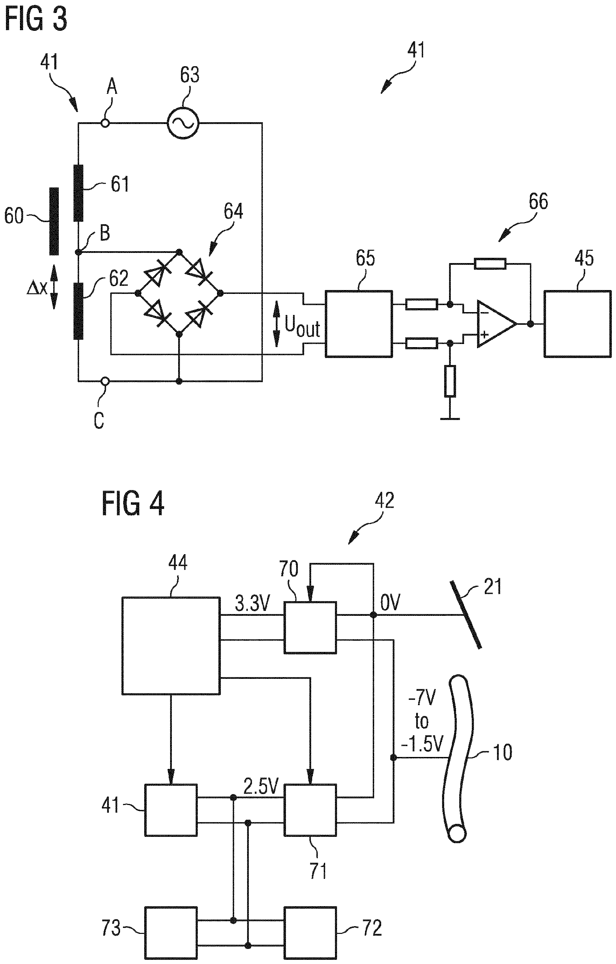

Fig. 2 zeigt ein schematisches Blockdiagramm einer in einem erfindungsgemäßen Pipelinesystem verwendeten Sensoreinheit 40. Mit 41 ist der bereits erwähnte Sensor, insbesondere ein Geophon, gekennzeichnet, der später in Verbindung mit Fig. 3 näher erläutert wird. Der Sensor 41 umfasst eine Energieversorgungseinheit 42, welche elektrisch zwischen dem Erdstab 21 und der Pipeline 10 angeordnet ist, sowie eine Verarbeitungseinheit 43. Die Verarbeitungseinheit 43 empfängt die von dem Sensor 41 erzeugten Signale an einem Analog-Digital-Converter 45. Dieser führt die digitalisierten Signale einer Signalverarbeitung 44 zu. Im Falle, dass im Rahmen der Signalverarbeitung ein kritisches Ereignis detektiert wurde, wird eine ein Alarmsignal repräsentierende Nachricht einem Digital-Analog-Converter 46 zugeführt. Ausgangsseitig ist dieser mit einem Rekonstruktionstiefpassfilter 48 verbunden. Das Tiefpassfilter 48 ist über einen Verstärker 50 mit der Pipeline 10 verbunden, über die die Nachricht übertragen wird. Mit der Pipeline 10 ist weiter im Empfangspfad ein Low-Noise-Verstärker 51 verbunden, der ausgangsseitig mit einem Anti-Aliasing-Tiefpassfilter 49 verbunden ist. Dieses wiederum ist mit einem Analog-Digital-Converter 47 verbunden, der die digitalisierten Empfangssignale der Signalverarbeitung 44 zur Verfügung stellt.

Über den Empfangspfad der Sensoreinheit 40 werden sämtliche über die Pipeline übertragenen Nachrichten durch eine jeweilige Sensoreinheit empfangen. Ist die Nachricht an die empfangende Sensoreinheit 40 adressiert, so wird diese durch die Signalverarbeitung 44 verarbeitet. Die Verarbeitung kann beispielsweise ein Wiederaussenden der empfangenden Nachricht über den Sendepfad umfassen, um auch über eine lange Distanz eine sichere Übertragung an den Zugangsknoten 32 sicherzustellen.

Um eine Energieversorgung der Sensoreinheit 40 alleine aus dem Kathodenschutzsystem sicherstellen zu können und auch auf darüber hinausgehende Energiespeicher, wie z.B. Batterien, Akkumulatoren oder Solarzellen, verzichten zu können, ist die Verwendung energieeffizienter Komponenten sowie ein energieeffizienter Betrieb der Komponenten erforderlich. Viele am Markt verfügbare seismische Sensoren sind bereits mit zusätzlicher Elektronik ausgestattet, welche für eine derartige Energieoptimierung keinen Raum mehr lassen. Ein für die Erfindung geeigneter Sensor ist beispielsweise das Modell B12/200 der Firma HBM Mess- und Systemtechnik GmbH. Dies ist ein differentieller, auf Induktion basierender Sensor, der schematisch in Verbindung mit seiner Beschaltung in Fig. 3 dargestellt ist.

Der Sensor besteht aus einem Kern 60 und zwei seriell miteinander verschalteten Spulen 61, 62. Anschlüsse der Spulen sind mit A, B und C gekennzeichnet. Der Sensor 41 wird durch eine oszillierende Spannung an den Anschlüssen A, C getrieben. Hierzu ist mit den Anschlüssen A, C ein Oszillator 63 verbunden. Die resultierende oszillierende Spannung an den Anschlüssen B und C hängt von der Position des Kerns 60 ab, wobei die Position abhängig von einer Bodenerschütterung ist. Der Kern ist Teil eines "Mass-String"-Systems, welches durch eine an ihn angreifende Kraft oder eine äquivalente Beschleunigung, verursacht durch eine seismische Welle, um die Distanz x ausgelenkt wird.

Der seismische Sensor B12/200 hat einen Widerstand von 40 Ω und eine Induktivität von 10 mH zwischen den Anschlüssen A und C. Mit einer oszillierenden Versorgungsspannung von nominal 2,5 V (effektiv) und einer Frequenz von 5 kHz benötigt der Sensor eine Leistung von etwa 2,5 mW. Mit einer Versorgungsspannung von 2,5 V produziert der Sensor ein Ausgangssignal von etwa 10 mV/g, wobei g die Erdbeschleunigung repräsentiert. Typische Geophone erreichen eine Empfindlichkeit von 0,1 mg. Diese Signalstärke resultiert in einem Ausgangssignal von etwa 1 µV. Aus diesem Grund wird das Ausgangssignal nach einer Gleichrichtung durch den Gleichrichter 64 und einer Filterung durch das Filter 65 mittels eines Verstärkers 66 verstärkt.

Die Dauer für die Abtastung eines Sensorwerts kann ungefähr 30 µs betragen, wenn beispielsweise ein Mikroprozessor von Typ MSP430 von Texas Instruments und sein Analog-Digital-Converter benutzt werden. Mit einer Abtastfrequenz von 100 Hz beträgt das Tastverhältnis von Sensor, Oszillator und Verstärker 3 ‰. Mit einer Leistungsaufnahme von 5 bis 10 mW im aktiven Zustand ergibt sich ein ungefährer Verbrauch von 15 bis 30 µW.

Das Oszillationssignal kann mit einem diskreten Silizium-Oszillator (z.B. LTC6900) mit einer Leistungsaufnahme von 500 µW erzeugt werden, wobei dem Oszillator ein passives Bandpass-Filter nachgeschaltet ist.

Wie bereits erläutert, erfolgt die Signalverarbeitung zur Ermittlung, ob ein kritisches Ereignis vorliegt, vollständig in der jeweiligen Sensoreinheit 40. Die Signalverarbeitung umfasst eine Vorverarbeitung (Preprocessing) sowie eine Detektion und Klassifikation.

Der Zweck der Vorverarbeitung besteht darin, Merkmalsvektoren für die Detektion und Klassifikation zu extrahieren. Eine Möglichkeit zur Ermittlung der Merkmalsvektoren besteht darin, eine (diskrete) Fourier-Transformation auf einen Abtastvektor (Sample Vector) der Länge N anzuwenden. Eine schnelle Fourier-Transformation (FFT) erfordert O(N log₂(N)) Operationen und O(N) Speicherplatz.

Der Ausgang des seismischen Sensors 41 wird mit einer Rate von üblicherweise 100 Hz abgetastet. Mit einem Abtastfenster von ungefähr 10 s erhält man N = 1024 Abtastwerte (Samples), welche einige kByte an Speicher und etwa 40000 Rechenoperationen erfordern. Bei Verwendung des MSP430-Mikroprozessors kann dies innerhalb einer Zeit von 2,5 s ausgeführt werden. Die Leistungsaufnahme im aktiven Zustand beträgt ungefähr 10 mW. Eine Erhöhung des Abtastfensters auf 100 s würde daher in etwa N = 10000 Abtastwerten (d.h. einigen 10 kBytes an Speicher und etwa 33 s an Ausführungszeit) resultieren. Dies würde die Speicherkapazität des genannten Prozessors überfordern.

Es ist deshalb vorgesehen, eine FFT auf einige Abtastfenster unterschiedlicher Größe, jedoch mit der gleichen Anzahl an Abtastwerten M, gleichzeitig anzuwenden. Die FFT reduziert den Speicherbedarf im Vergleich zum obigen Ausführungsbeispiel um den Faktor 7 M/(1024*(log₂M-3)) für eine maximale Fenstergröße von ungefähr 10 s. Die Ausführungszeit wird um den Faktor 127 M* log₂M/(10240*(M/8-1)) reduziert. Es hat sich als zweckmäßig herausgestellt, M = 32 zu wählen, was in einer Reduktion des Speicherbedarfs um den Faktor 7/64 = 0,11 und in einer Reduktion der Rechenzeit um den Faktor 127/192 = 0,66 resultiert. Hierdurch kann eine Fourier-Transformation auf dem Mikrocontroller, wie dem erwähnten MSP430, erfolgen, wobei kein zusätzlicher DSP erforderlich ist. Für die Leistungsaufnahme wird angenommen, dass der Mikrocontroller kontinuierlich aktiv ist, da auf diesem auch weitere Aufgaben (Tasks) laufen.

Alternativ kann eine schnelle Wavelet-Transformation zum Extrahieren der Merkmalsvektoren angewendet werden. Dies bietet sich insbesondere bei seismischen Signalen mit einem Burst-Charakter an.

Der resultierende Vektor von Fourier- (oder Wavelet-) Koeffizienten oder deren absolute Werte können weiter komprimiert werden durch eine Mittelwertbildung der Absolutwerte oder Betragsquadrate der Koeffizienten innerhalb geeigneter Frequenzbins (Frequenzlinien).

In Umgebungen mit einer Vielzahl an seismischen Quellen, beispielsweise verursacht durch Verkehr (Züge usw.), welcher in der Nähe der Pipeline auftritt, besteht das durch einen Sensor erfasste Signal aus verschiedenen, vermischten Signalen. Um die Quellen der Signale separieren zu können, werden verschiedene Sensorsignale benötigt. Prinzipiell können diese Signale von benachbarten Sensoreinheiten erfasst und berücksichtigt werden, was jedoch eine Kommunikation zwischen den benachbarten Sensoreinheiten bedingen würde. Deshalb kann vorgesehen sein, dass eine Sensoreinheit eine Mehrzahl, insbesondere drei, Sensoren in einem Abstand von etwa 5 bis 10 m zueinander aufweist, die mit der gleichen Verarbeitungseinheit 43 gekoppelt sind. Eine Sensoreinheit mit mehreren Sensoren kann mit weniger Energie betrieben werden als eine Kommunikation zwischen mehreren Sensoreinheiten verursachen würde.

Die Separation der Signalquellen kann durch eine Hauptkomponentenanalyse (Principal Component Analysis, PCA) erfolgen. Ein normalisierter Eigenvektor einer 3x3-Korrelationsmatrix der drei Sensor-Abtastvektoren muss hierzu bestimmt werden. Die Abtastvektoren werden auf die drei Eigenvektoren projiziert. Diese repräsentieren die "separierten" Signale, welche, wie oben beschrieben, verarbeitet werden. Der Aufwand zum Abtasten und Vorverarbeiten verdreifacht sich. Darüber hinaus müssen die Eigenvektoren der symmetrischen 3x3-Matrix bestimmt werden. Dies erfordert weniger als 10 ms auf dem MSP430-Mikrocontroller.

Im Rahmen der Detektion und Klassifikation erfolgt weiter eine Analyse der relativen Stärke der Fourier-Koeffizienten. Zu diesem Zweck werden die Vektoren der Fourier-Koeffizienten auf ihre Gesamtleistung normalisiert. Diese normalisierten Merkmalsvektoren werden mit lokal in den Sensoreinheiten gespeicherten Merkmalsvektoren verglichen, wobei diese Referenz-Merkmalsvektoren typische Ereignisse und damit assoziierte Label repräsentieren. Beispielsweise repräsentiert ein Referenz-Merkmalsvektor eine Ereignis-ID und ein Maß für die Relevanz bzw. Ernsthaftigkeit des Ereignisses. Die Referenz-Merkmalsvektoren können in einer Datenbank der Sensoreinheit hinterlegt sein. Die Datenbank sollte ebenfalls "normale" Ereignisse, welche nicht kritisch sind, enthalten.

Die Detektion und Klassifikation wird gleichzeitig durchgeführt. Von der Verarbeitungseinheit wird eine Distanz eines jeden Merkmalsvektors mit allen repräsentativen Referenz-Merkmalsvektoren der Datenbank verglichen. Die Referenz-Merkmalsvektoren mit der geringsten Distanz repräsentieren dann das gegenwärtige, detektierte Ereignis. Die Distanzmessung kann dazu verwendet werden, um Wahrscheinlichkeiten für verschiedene Ereignisse zuzuordnen. Die Komplexität des Vergleichs eines gemessenen Merkmalsvektors der Größe N mit allen M Datenbankeinträgen ist O(NM). Für N = 1000 und M = 10 erfordert dies ungefähr 0,63 s auf einem MSP430-Mikrocontroller. Die erforderliche Speicherkapazität für eine multiskalare Fourier-Zerlegung mit 138 Abtastwerten zu jeder Zeit beträgt 267 Bytes mit zwei Bytes pro Wert und ohne ein Down-Sampling.

Eine Alarm-Nachricht wird nur dann übertragen, wenn das detektierte Ereignis ein kritisches Ereignis mit einer bestimmten, minimalen Wahrscheinlichkeit ist.

Das Erstellen der Datenbank kann initial durch Messungen erfolgen, durch die so viele typische Ereignisse wie möglich in die Datenbank aufgenommen werden sollten. Darüber hinaus ist es sinnvoll, wenn die Datenbank weiter trainiert wird. Neue relevante Ereignisse können durch eine Aktualisierung der Datenbank aufgenommen werden. Hierdurch können beispielsweise Unterschiede in der Ausbreitung einer seismischen Welle aufgrund unterschiedlicher Erd- bzw. Bodenbeschaffenheiten berücksichtigt werden. Neue Ereignisvektoren können zunächst lokal gespeichert werden, beispielsweise in der zentralen Verarbeitungseinheit. Zum Beispiel nachts, wenn keine Bauarbeiten erfolgen, können diese an die Sensoreinheiten verteilt werden.

Die Übertragung von Nachrichten von einer Kommunikationseinrichtung 30 des Pipelinesystems zu einer anderen Kommunikationseinrichtung erfolgt, wie erläutert, über die Pipeline. Die Netzwerkschicht wird damit durch die Pipeline, d.h. deren Material, bereitgestellt.

Dabei werden folgende unterschiedliche Arten von Nachrichten übertragen:
1. Steuernachrichten:
   Die Sensoreinheiten bilden zusammen mit den Zugangsknoten und der zentralen Verarbeitungseinheit ein Kommunikationsnetzwerk. Die Sensoreinheiten müssen Routen zu den Zugangsknoten, die sich in den Ventil- und/oder Pumpstationen befinden, aufbauen. Steuernachrichten (Control Data Packets) werden durch die Zugangknoten erzeugt und enthalten einen Kennzeichner des Zugangsknotens, den Kennzeichner des letzten weiterleitenden Knotens und die Hop-Distanz zum Zugangsknoten. Aus Redundanzgründen sollten beide Zugangsknoten an den gegenüberliegenden Enden eines Pipelineabschnitts ein Netzwerk aufbauen.

   Jede Sensoreinheit verwaltet eine Liste von Nachbarn, von denen sie Nachrichten empfangen können, und einen Qualitätsindikator für die direkte Verbindung zu jedem dieser Nachbarn. Eine Kommunikationseinrichtung leitet Steuerdaten durch einen Broadcast weiter, wenn die Verbindung vom Empfänger eine akzeptable Qualität aufweist. Bereits empfangene Nachrichten werden ignoriert, um Schleifen zu vermeiden. Basierend auf der Hop-Distanz zu einem Zugangsknoten und der Qualität der Verbindung können verschiedene benachbarte Sensoren als weiterleitende Knoten für Nachrichten, die für einen bestimmten Zugangsknoten bestimmt sind, ausgewählt werden. Steuernachrichten können weiterhin Zeitstempel, welche für eine Zeitsynchronisation der Kommunikationseinrichtung benötigt werden, enthalten. Zusammen beträgt die Größe der Pakete ungefähr 17 Bytes, einschließlich eines Trennsymbols (4 Bytes), einem Kennzeichner des Zugangspunkts (2 Bytes), einem Kennzeichner der letzten weiterleitenden Kommunikationseinrichtung (2 Bytes), der Hop-Distanz (1 Byte) und einem Zeitstempel (8 Bytes). Diese Steuernachrichten können in Intervallen von ungefähr 30 Minuten übertragen werden.
2. Alarmnachrichten:
   Sobald ein kritisches Ereignis durch eine Sensoreinheit detektiert und klassifiziert wurde, wird eine korrespondierende Alarmnachricht erzeugt und zu den zwei benachbarten Sensoreinheiten übertragen, welche die Alarmnachricht auch zu den in ihrer Richtung gelegenen weiteren Zugangsknoten weiterleiten. Wenn eine der beiden Verbindungen einen Fehler aufweist, wird eine alternative, benachbarte Kommunikationseinrichtung als weiterleitender Zugangsknoten ausgewählt. Alarmnachrichten umfassen den Kennzeichner des die Alarmnachricht erzeugenden Sensorknotens, den Zeitpunkt des Auftretens des kritischen Ereignisses, seine Klassifikation und, optional, ein Wahrscheinlichkeitsmaß für die Klassifikation. Da der Ort einer die Alarmnachricht aussendenden Sensoreinheit bekannt ist, kann nach Erhalt der Alarmnachricht anhand der Kenntnis des Kennzeichners der Sensoreinheit der genaue Ort bestimmt werden. Die Größe einer solchen Alarmnachricht beträgt 16 Bytes, einschließlich Trennsymbolen (4 Bytes), dem Kennzeichner der sendenden Sensoreinheit (2 Bytes), der Klassifikation (1 Byte), der Wahrscheinlichkeit (1 Byte) und einem Zeitstempel (8 Bytes).
3. Konfigurationsnachrichten:
   Die Sensoreinheiten sind derart ausgestaltet, dass diese rekonfiguriert werden können. Dies kann beispielsweise im Falle der Aktualisierung der Referenz-Merkmalsvektoren notwendig sein. Die Rekonfiguration kann durch einen "Flood"-Mechanismus erfolgen, ähnlich einer Netzwerk-Steuernachricht, wobei benachbarte Kommunikationseinrichtungen die Nachrichten weiterleiten. Konfigurationsnachrichten umfassen den Kennzeichner sowie den Konfigurationstyp und die Konfigurationsdaten. Der Kennzeichner des Empfängers kann durch eine Broadcast-Adresse ersetzt sein. Konfigurationsnachrichten werden selten, beispielsweise einmal pro Monat oder einmal pro Jahr, übertragen. Größere Konfigurationsdaten, beispielsweise für eine Aktualisierung der Datenbank der Merkmalsvektoren, können in Teileinheiten kleinerer Größe erfolgen.
4. Daten-Upload-Nachrichten:
   Für eine Aktualisierung (Update) der Datenbank mit den Referenz-Merkmalsvektoren müssen lokal in einem Permanentspeicher (beispielsweise einem EEPROM) der Sensoreinheit gespeicherte Merkmalsvektoren an die zentrale Verarbeitungseinheit 33 übertragen werden. Der Kommunikationsmechanismus ist hierbei der Gleiche wie bei den Alarmnachrichten. Jedoch ist die Priorität hier geringer. Diese Nachrichten umfassen historische Informationen und beinhalten den Kennzeichner der sendenden Sensoreinheit und eine Abfolge von Merkmalsvektoren und zugehörige Zeitstempel. Diese Art von Nachrichtenübertragung ist beschränkt auf Zeiten mit geringer (seismischer) Aktivität, beispielsweise während der Nacht, zu der üblicherweise keine Bauarbeiten stattfinden. Es wird erwartet, dass die Übertragung von Daten-Upload-Nachrichten nicht häufiger als wöchentlich erfolgt. Die lokal in den Sensoreinheiten 40 gespeicherten Merkmalsvektoren sind solche Merkmalsvektoren, welche nach der Klassifikation nicht als kritisches Ereignis betrachtet wurden. Diese können dennoch zur Verbesserung der Genauigkeit der Klassifikation verwendet werden.

Die oben genannten vier unterschiedlichen Nachrichtentypen enthalten vorzugsweise eine 2-Byte große Checksumme, um Übertragungsfehler ermitteln zu können.

Nachdem die Sensoreinheiten 40 das gleiche Medium, die Pipeline, für die Kommunikation nutzen, ist eine Zugriffskoordination auf den Datenübertragungskanal erforderlich. Wenn die Leistungsaufnahme für den Empfang von Daten unkritisch ist, können Zufalls-Zugriffsmethoden eingesetzt werden. Andernfalls muss die Empfangseinheit einer Sensoreinheit so oft wie möglich in einem passiven Energiesparzustand sein, jedoch ohne an sie gerichtete Nachrichten zu überhören. Im Falle des erfindungsgemäßen Pipelinesystems haben sich die folgenden drei Kommunikationsverfahren als geeignet herausgestellt:
1. CSMA-CA (Carrier Sense Multiple Access with Collision Avoidance):
   Dadurch, dass von den Sensoreinheiten lediglich dann Nachrichten übertragen werden, wenn ein kritisches Ereignis vorliegt, ist der Datenverkehr üblicherweise gering. Nachdem die Empfangseinheit der Sensoreinheit nur wenig Energie verbraucht, ist ein Zufallszugriffsverfahren der am Besten geeignete Zugriffsmechanismus aufgrund seiner kurzen Latenzzeiten. Um Nachrichtenkollisionen zu vermeiden, hören die Sensoreinheiten in den Datenübertragungskanal für einige Zeit hinein, wenn sie eine Nachricht übertragen wollen. Die Nachrichtenübertragung wird nur dann gestartet, wenn der Datenübertragungskanal nicht belegt ist. Eventuell auftretende Kollisionen können durch einen sog. RTS/CTS (Request To Send, Clear to Send) Handshake vermieden werden, bei denen der Sender zunächst eine RTS-Nachricht überträgt und der Empfänger mit einer CTS-Nachricht antwortet, wenn dieser die RTS-Nachricht erhalten hat. Erst im Anschluss erfolgt die eigentlich zu übertragende Nachricht.
2. TDMA (Time Division Multiple Access):
   Der Zugriff auf den Datenübertragungskanal wird innerhalb von Zeitslots erteilt, welche bestimmte Verbindungen, d.h. Paaren von Kommunikationseinrichtungen, zugewiesen sind. Die Zeitschlitze werden derart gewählt, dass Alarmnachrichten so schnell wie möglich übertragen werden können. Wenn beispielsweise entlang der Pipeline alle 500 m Sensoreinheiten angeordnet sind, sind bis zu 60 Sensoren pro Pipelinesegment, das 30 km aufweist, vorgesehen. Mit einer üblichen Übertragungsreichweite von 5 km hat eine Sensoreinheit Kontakt mit ungefähr 20 benachbarten Sensoreinheiten. Mit ungefähr sechs dieser Sensoreinheiten hält ein bestimmter Sensor eine Kommunikationsverbindung aufrecht. Dies erfordert 360 Zeitschlitze für sämtliche Kommunikationsverbindungen ohne eine räumliche Bewertung (Spatial Reviews) von Zeitschlitzen. Für eine Zeitschlitzlänge von 1 s benötigt man 6 Minuten, um einen Alarm zu einem Zugangsknoten zu übertragen. Eine Zeitschlitzlänge von 1 s ist dabei ausreichend, um 100 Bytes zu übertragen. Ein Vorteil von TDMA besteht darin, dass dieses Verfahren deterministisch ist. Im Vergleich zu CSMA/CA sind jedoch die Latenzzeiten höher.
3. Low Power Listening:
   Bei diesem Verfahren aktiviert jede Sensoreinheit seine Empfangseinheit in regulären Intervallen für eine kurze Zeit und prüft, ob Übertragungen vorliegen. Falls es keine Nachrichtenübertragungen gibt oder die betreffende Sensoreinheit weder Empfänger noch Weiterleiter einer empfangenen Nachricht ist, wird die Empfangseinheit wieder deaktiviert. Falls eine Nachrichtenübertragung vorliegt, verbleibt die Sensoreinheit aktiv und empfängt die Nachricht, bevor die Sensoreinheit

wiederum in einen Ruhezustand übergeht. Eine sendende Kommunikationseinrichtung wiederholt die Übertragung einer Nachricht lange genug, so dass eine empfangende Kommunikationseinrichtung in der Lage ist, die Nachricht zu hören und zu empfangen.

Jede Übertragung mit Ausnahme von Broadcast-Nachrichten wird vorzugsweise dabei durch die empfangende Sensoreinheit gegenüber den sendenden Kommunikationseinrichtungen bestätigt. Eine solche Bestätigungsnachricht umfasst den Kennzeichner der empfangenden Sensoreinheit und einen Indikator der empfangenden Nachricht, wie z.B. Typ und Sequenznummer.

Die in Fig. 2 mit Bezugszeichen 73 gekennzeichnete physikalische Schicht erhält von der Signalverarbeitung 44 und dem nachgeschalteten Digital-Analog-Converter 46 das zu übertragende Signal. Durch das Rekonstruktionsfilter 48 erfolgt eine Interpolation. Anschließend erfolgt eine Verstärkung des Verstärkers 50. Dieses so verstärkte Signal wird über die Pipeline 10 zu jeder benachbarten Kommunikationseinrichtung 30 oder zu der zentralen Verarbeitungseinheit 33 übertragen. Die Verwendung der Pipeline 10 als Kommunikationskanal entspricht einer asymmetrischen Einzelleitung mit Erdrückleiter (Ground Return) .

Eine Sendeeinheit, die durch eine jeweilige Erdstange geerdet ist, erlaubt die Übertragung eines Datensignals auf die Pipeline, über die sich dieses zu den anderen Kommunikationseinrichtungen ausbreitet. Die frequenzabhängige Dämpfung des Signals über die Pipeline steigt stark für Frequenzen oberhalb von 3 kHz an. Die Gesamtdämpfung hängt von der Feuchtigkeit und damit der Leitfähigkeit des umgebenden Erdbodens ab. Die Dämpfung steigt dabei mit Feuchtigkeit an. Die Ursache hierfür liegt in einem Ansteigen eines Querleitwerts (Shunt Conductance), der aus dem Erdboden mit höherer Feuchtigkeit resultiert. Die Gesamtdämpfung der Pipeline bis zu 3 kHz ist bei hoher Feuchtigkeit ungefähr 1 dB/km. Eine Abschätzung der Empfindlichkeit des Empfangsteils der physikalischen Schicht und der Reichweite zweier benachbarter Knoten ist wie folgt: Das thermische Rauschen innerhalb der betrachteten 3 kHz-Bandbreite beträgt -140 dBm bei 20 °C. Bei geringeren Temperaturen unterhalb der Erdoberfläche ist dieser Wert unwesentlich geringer.

Der Empfangsteil einer Kommunikationseinrichtung umfasst einen Low-Noise-Verstärker (LNA) 51 an seinem Eingang und einen nachgeschalteten Analog-Digital-Converter 49, welche zusammen üblicherweise 15 dB an Rauschleistung hinzufügen. Eine angemessene Distanz zu diesem Grundrauschen ist 15 dB, um eine ausreichende Wahrscheinlichkeit für eine korrekte Detektion einer Nachricht bereitzustellen. Aus diesem Grund ergibt sich eine Grenze für die Detektionsleistung eines Empfangssignals bei -110 dBm. Es wird davon ausgegangen, dass die Signalamplitude eines gesendeten Signals 2 V beträgt, was im Bereich eines Kathodenschutzsystems liegt. Dies resultiert in einer Leistung von -10 dBm bei 50 Ω Leitungsimpedanz. Dies führt im Ergebnis zu einer Reichweite von ungefähr 5 km.

Die oben genannten Betrachtungen berücksichtigen thermische und methodische Rauschquellen des Empfängers. Es ist weiterhin zweckmäßig, zusätzliche künstliche Quellen zu berücksichtigen. Insbesondere Erdströme erzeugen weitere Empfangssignale. Beispiele hierfür sind harmonische und Burst-Signale von Stromversorgungen von Bahnlinien, nicht nur in ländlichen Gebieten, sondern auch innerhalb von Städten.

Aus diesem Grund werden robuste und einfache Modulationen, wie z.B. Pulsmodulationsschemen, vorgeschlagen. Pulsweitenmodulation (PWM), Pulslagemodulation (PLM, auch Pulsphasenmodulation PPM genannt) und Pulsfrequenzmodulation (PFM) sind einfach zu implementieren, sowohl im Empfangsteil als auch im Sendeteil. Diese sind robust gegenüber Amplitudenabweichungen, da lediglich die Breiten, Phase oder Wiederholfrequenz der Pulse Informationen beinhalten. Ein Nachteil bei Pulsbreiten- und Pulsfrequenzmodulation ist die Abhängigkeit der mittleren Leistung eines Signalinformationsinhalts, welcher den mittleren Leistungsverbrauch verändert.

Die Pulsphasenmodulation weist diesen Nachteil nicht auf. Die mittlere Signalleistung ebenso wie die Leistungsaufnahme ist unabhängig vom Inhalt der Signalinformation. Für eine 1-Bit-Codierung ist die maximale Pulsbreite die Hälfte der Impulsfolge. Bei einer verfügbaren Bandbreite von 3 kHz kann eine maximale Bitrate von 1,5 kB/s abgeleitet werden. Um Toleranzen für die Synchronisation bereitzustellen, sollte die Bitrate 1 kB/s nicht übersteigen, was ungefähr 8 ms pro Byte entspricht. Jede zu übertragende Nachricht sollte eine Startrahmen- und Endrahmen-Trenn-Bytesequenz, üblicherweise 2 Bytes, umfassen.

Fig. 4 zeigt eine schematische Darstellung der Energieversorgungseinheit 42 einer Sensoreinheit 40. Die Energieversorgung erfolgt aus dem bereits erwähnten aktiven Korrosionsschutzsystem. Der Spannungsabfall zwischen der Pipeline und einem jeweiligen Erdstab und der verfügbare Strom an der Einspeisung (vgl. das mit dem Bezugszeichen 20 gekennzeichnete Element des Kathodenschutzsystems in Fig. 1) hängt stark vom Zustand der Pipeline ab. Die Energieversorgung der Sensoreinheiten muss deshalb Toleranzen berücksichtigen. Insbesondere sollten Stromspitzen vermieden werden, um die Funktionalität des Kathodenschutzsystems nicht zu mindern.

Typischerweise stellt ein Kathodenschutzsystem eine Spannung von ungefähr -2 V bereit. Die Anode der Stromversorgung wird durch die Erdstäbe aus Edelstahl gebildet.

Nachfolgend erfolgt eine Betrachtung des Energieverbrauchs. Der Mikrocontroller einer jeweiligen Sensoreinheit muss kontinuierlich betrieben werden, um die Signalverarbeitung und die Systemsteuerung sicherzustellen. Seine Leistungsaufnahme von ungefähr 10 mW bei 3,3 V wird durch einen geschalteten Spannungsregler (Step-Up Switched Voltage Regulator, z.B. LTC3459) sichergestellt, der eine Eingangsspannung von 1,5 V bis 7 V verarbeiten kann. Der Spannungsregler ist in Fig. 4 mit dem Bezugszeichen 70 gekennzeichnet.

Um den mittleren Leistungsverbrauch der Sensoreinheit zu reduzieren, werden nicht nur Komponenten mit geringer Leistungsaufnahme verwendet, sondern ebenfalls solche Komponenten, welche nicht kontinuierlich betrieben werden müssen. Eine Maßnahme besteht darin, den Sensor 41 und seine Verstärker in einen Ruhezustand zu versetzen, so oft dies möglich ist. Es ist ausreichend, wenn der Sensor 41 eine Einschaltzeit von 30 µs bei einer Abtastrate von 10 ms aufweist. Dies erfordert eine Einschaltzeit der aktiven Komponenten, wie z.B. seines Operationsverstärkers im Bereich von Mikrosekunden oder weniger. Beispiele von Komponenten, die dieses Erfordernis erfüllen, sind OPA847 oder OPA687 von Texas Instruments, welche eine Einschaltzeit von 60 ns und einen Ausschaltzeit von 200 ns aufweisen, und MAX9914 von der Firma MAXIM, welcher eine Einschaltzeit von 2 µs aufweist.

Die Leistungsanforderungen der physikalischen Schicht sind hauptsächlich durch den Ausgangsleistungsverstärker verursacht. Es wird davon ausgegangen, dass die Pipeline eine Impedanz von ungefähr 50 Ω hat. Dies erfordert eine Ausgangsleistung von 80 mW, um die oben genannte Reichweite von 5 km des Kommunikationssystems sicherzustellen. Die Nachrichtenlänge des Kommunikationssystems beträgt ungefähr 128 Bytes. Eine Übertragungszeit eines Bytes beträgt 8 ms, so dass die Übertragung einer Nachricht ungefähr 1 s dauert. Unter Berücksichtigung zusätzlicher Protokollinformationen führt dies im ungünstigsten Fall zu einer Gesamtzeit von 2 s. Dies erfordert eine Energie von 0,16 Ws für die Übertragung einer Nachricht.

Um Spitzenströme auf der Pipeline zu vermeiden, ist weiterhin ein Energiespeicher 72 vorgesehen, beispielsweise in Form eines Zweischichtkondensators (Gold Cap). Während der Übertragung sollte der Verstärker des Sensors 41 und der dem Sensor zugeordnete Spannungsregler 71 durch den Mikrocontroller ausgeschaltet werden, um die Leistung aus dem Energiespeicher zu beziehen und nicht einen Strom in die Pipeline einzutragen.

Die Verwendung des Kathodenschutzsystems für die Energieversorgung von autarken Sensoreinheiten erlaubt es, das Überwachungssystem mit einem im Vergleich zum Stand der Technik wesentlich geringeren Erhaltungsaufwand bereitzustellen. Die Nutzung des Kathodenschutzsystems als Energiequelle erfordert, dass die Überwachung nicht zuviel Energie verbraucht. Dieses Erfordernis wird durch die Verwendung der Pipeline für die Kommunikation und die Verwendung eines Modulationsschemas mit geringer Komplexität bereitgestellt. Hierdurch lassen sich nicht nur der Leistungsverbrauch reduzieren, sondern auch die Kosten. Eine weitere Energiereduktion ergibt sich dadurch, dass die Signalverarbeitung durch die Sensoreinheiten selbst erfolgt, wobei ein optimiertes multi-skalares FFT-Verfahren zum Einsatz kommt. Dieses reduziert die Komplexität der Berechnungen und reduziert somit Kosten und den Leistungsverbrauch. Eine der Signalverarbeitung nachgeschaltete Detektion und Klassifikation erfolgt ebenfalls durch die Sensoreinheiten selbst. Hierdurch kann die notwendige Kommunikation auf ein Minimum reduziert werden. Dies sorgt für einen geringeren Leistungsverbrauch sowie für geringe Latenzzeiten im Falle zu übertragender Alarmnachrichten. Eine für die Klassifikation notwendige Datenbank mit Referenz-Merkmalsvektoren kann offline erstellt und an die Sensoreinheiten übertragen werden. Dadurch kann die Klassifikationsperformanz erhöht werden, wodurch im Laufe der Zeit die Anzahl fehlerhafter Alarmnachrichten abnimmt. Auch hierdurch kann der Energiebedarf gesenkt werden.

## Patentansprüche

1. Pipelinesystem, umfassend
- zumindest eine elektrisch leitende Pipeline (10), die mit dem Erdboden in Verbindung steht, und die gegenüber dem Erdboden isoliert ist;
- ein Kathodenschutzsystem,
- ein Kommunikationssystem mit mehreren Kommunikationseinrichtungen (30), wobei für eine Kommunikation zwischen den Kommunikationseinrichtungen (30) Daten über die Pipeline (10) übertragbar sind;
**dadurch gekennzeichnet, dass** das Kathodenschutzsystem eine Anzahl an im Erdboden angeordneten Erdstäben (21) umfasst, die jeweils elektrisch mit dem Erdboden verbunden sind und elektrisch mit der Pipeline (1) gekoppelt sind, wobei die Kommunikationseinrichtungen (30) entlang der Pipeline (10) angeordnete Sensoreinheiten (40) umfassen, welche aus dem Kathodenschutzsystem (20) mit Energie versorgt werden.

2. Pipelinesystem nach Anspruch 1, **dadurch gekennzeichnet dass** die Sensoreinheiten (49) seismische Sensoreinheiten zur Erfassung von Bodenerschütterungen sind.

3. Pipelinesystem nach Anspruch 1 oder 2, **dadurch gekennzeichnet dass** die Kommunikationseinrichtungen (30) aus dem Kathodenschutzsystem (20) mit Energie versorgt werden.

4. Pipelinesystem nach einem der vorhergehenden Ansprüche, **dadurch gekennzeichnet, dass**
eine Energieversorgungseinheit (42) einer jeweiligen Sensoreinheit (40) elektrisch zwischen einem zugeordneten Erdstab (21) des Kathodenschutzsystems (20) und der Pipeline (10), insbesondere einer die Pipeline (10) umgebenden Klammer des Kathodenschutzsystems (20), verschaltet ist, wobei durch die Energieversorgungseinheit (42) Energie zur Versorgung der Sensoreinheit (40) aus einer Spannungsdifferenz zwischen dem Erdstab (21) und der Pipeline (10) gewinnbar ist.

5. Pipelinesystem nach Anspruch 4,
**dadurch gekennzeichnet, dass**
die Energieversorgungseinheit (42) einen Energiespeicher zur temporären Energieversorgung der Sensoreinheit (40), insbesondere während der Übertragung einer Nachricht an eine andere Kommunikationseinrichtung (30), umfasst, wobei der Energiespeicher aus dem Kathodenschutzsystem (20) aufladbar ist.

6. Pipelinesystem nach einem der vorhergehenden Ansprüche,
**dadurch gekennzeichnet, dass**
eine jeweilige Sensoreinheit (40) eine Verarbeitungseinheit (43) umfasst zur Signalverarbeitung eines aus einer Bodenerschütterung resultierenden Signals, bei der aus dem Signal Merkmalsvektoren ermittelt und anhand eines Vergleichs mit in der Sensoreinheit gespeicherten Referenzdaten klassifiziert werden, wobei bei einer Klassifikation als kritisches Ereignis eine Alarmnachricht von der Sensoreinheit (40) ausgesendet wird.

7. Pipelinesystem nach Anspruch 6,
**dadurch gekennzeichnet, dass**
die Verarbeitungseinheit (43) dazu ausgebildet ist, das Signal der Sensoreinheit (40) mit einer Abtastrate von 100 Hz abzutasten.

8. Pipelinesystem nach Anspruch 6 oder 7,
**dadurch gekennzeichnet, dass**
zur Ermittlung der Merkmalsvektoren durch die Verarbeitungseinheit (43) auf zumindest einen Sample-Vektor des abgetasteten Signals mit einer gegebenen Anzahl an Samples pro Sample-Fenster, insbesondere mit unterschiedlichen Sample-Fenstergrößen, eine Fouriertransformation anwendbar ist.

9. Pipelinesystem nach Anspruch 6 oder 7,
**dadurch gekennzeichnet, dass**
zur Ermittlung der Merkmalsvektoren durch die Verarbeitungseinheit (43) auf das abgetastete Signal eine Wavelet-Transformation anwendbar ist.

10. Pipelinesystem nach Anspruch 8 oder 9,
**dadurch gekennzeichnet, dass**
die resultierenden, normalisierten Fourier- oder Wavelet-Koeffizienten durch die Verarbeitungseinheit (43) mit in der Sensoreinheit (40) gespeicherten Referenz-Koeffizienten vergleichbar sind.

11. Pipelinesystem nach einem der vorhergehenden Ansprüche,
**dadurch gekennzeichnet, dass**
ein Sensor der Sensoreinheit (40) dazu ausgebildet ist, Frequenzen von maximal 10 Hz zu detektieren.

12. Pipelinesystem nach einem der vorhergehenden Ansprüche,
**dadurch gekennzeichnet, dass**
eine Sensoreinheit (40) mehrere, räumlich getrennt angeordnete Sensoren (41) umfasst, deren Signale einer gemeinsamen Verarbeitungseinheit (43) zuführbar sind.

13. Pipelinesystem nach einem der vorhergehenden Ansprüche,
**dadurch gekennzeichnet, dass**
die Sensoreinheiten (40) in vorgegebenen Abständen zwischen zwei Zugangsknoten (32) des Kommunikationssystems angeordnet sind, wobei eine von einer Sensoreinheit (40) zu einem der Zugangsknoten (30) übertragene Nachricht über die dazwischen liegenden Sensoreinheiten (40) übertragen wird, wobei durch zumindest manche der dazwischen liegenden Sensoreinheiten (40) eine Weiterleitung der Nachricht vorgenommen wird.

14. Pipelinesystem nach Anspruch 13,
**dadurch gekennzeichnet, dass**
die Zugangsknoten (30) in Pump- und/oder Ventilstationen der Pipeline angeordnet sind und durch eine Energieversorgung der Pump- und/oder Ventilstation mit Energie versorgt sind.

15. Pipelinesystem nach Anspruch 13 oder 14,
**dadurch gekennzeichnet, dass**
die Kommunikationseinrichtungen jeweils eine Sende-/Empfangseinheit umfassen, welche dazu ausgebildet sind, eine Pulsbreiten-, Pulsphasen- oder Pulsfrequenzmodulation oder FSK zur Kommunikation zu verwenden, insbesondere CSMA-CA oder TDMA oder Low Power Listening.

16. Verfahren zum Betreiben eines Pipelinesystems, das umfasst
- zumindest eine elektrisch leitende Pipeline (10), die mit dem Erdboden in Verbindung steht, und die gegenüber dem Erdboden isoliert ist;
- ein Kathodenschutzsystem (20), das eine Anzahl an im Erdboden angeordneten Erdstäben (21) umfasst, die jeweils elektrisch mit dem Erdboden verbunden sind und elektrisch mit der Pipeline (10) gekoppelt sind;
- ein Kommunikationssystem mit mehreren Kommunikationseinrichtungen (30), wobei für eine Kommunikation zwischen den Kommunikationseinrichtungen Daten über die Pipeline (10) übertragbar sind;
bei dem
durch die entlang der Pipeline angeordneten und als Sensoreinheiten (40) ausgebildete Kommunikationseinrichtungen (30) Signale erfasst werden, wobei die Sensoreinheiten (40) aus dem Kathodenschutzsystem (20) mit Energie versorgt werden.

## Claims

1. Pipeline system, comprising
- at least one electrically-conducting pipeline (10), which is connected to the ground and which is isolated from the ground;
- a cathode protection system;
- a communication system with a number of communication devices (30), wherein data is able to be transmitted via the pipeline (10) for communication between the communication devices (30);
**characterised in that**
the cathode protection system comprises a number of ground rods (21) arranged in the ground, which are each connected electrically to the ground and are coupled electrically to the pipeline (1), wherein the communication devices (30) comprise sensor units (40) arranged along the pipeline (10), which are supplied with energy from the cathode protection system (20).

2. Pipeline system according to claim 1, **characterised in that** the sensor units (49) are seismic sensor units for detecting ground tremors.

3. Pipeline system according to claim 1 or 2, **characterised in that** the communication devices (30) are supplied with energy from the cathode protection system (20).

4. Pipeline system according to one of the preceding claims,
**characterised in that**
an energy supply unit (42) of a respective sensor unit (40) is connected electrically between an assigned ground rod (21) of the cathode protection system (20) and the pipeline (10), especially a bracket of the cathode protection system (20) surrounding the pipeline (10), wherein energy is able to be obtained by the energy supply unit (42) for supplying the sensor unit (40) from a voltage difference between the ground rod (21) and the pipeline (10).

5. Pipeline system according to claim 4,
**characterised in that**
the energy supply unit (42) is an energy store for temporary energy supply of the sensor unit (40), especially during the transmission of a message to a communication device (30), wherein the energy store is able to be charged from the cathode protection system (20).

6. Pipeline system according to one of the preceding claims,
**characterised in that**
a respective sensor unit (40) includes a processing unit (43) for signal processing of a signal resulting from a ground tremor, in which characteristic vectors are determined from the signal and are classified on the basis of a comparison with reference data stored in the sensor unit, wherein, for a classification as a principle event, an alarm message is transmitted by the sensor unit (40).

7. Pipeline system according to claim 6,
**characterised in that**
the processing unit (43) is embodied to sample the signal of the sensor unit (40) at a sampling rate of 100 Hz.

8. Pipeline system according to claim 6 or 7,
**characterised in that**,
for determination of the characteristic features by the processing unit (43), a Fourier transformation is able to be applied to at least one sample vector of the sampled signal with a given number of samples per sample window, especially with different sample window sizes.

9. Pipeline system according to claim 6 or 7,
**characterised in that**,
for determination of the characteristic features by the processing unit (43) a wavelet transformation is able to be applied to the sampled signal.

10. Pipeline system according to claim 8 or 9,
**characterised in that**
the resulting, normalised Fourier or wavelet coefficients are able to be compared by the processing unit (43) with reference coefficients stored in the sensor unit (40).

11. Pipeline system according to one of the preceding claims,
**characterised in that**
a sensor of the sensor unit (40) is embodied to detect frequencies of maximum 10 Hz.

12. Pipeline system according to one of the preceding claims,
**characterised in that**
a sensor unit (40) comprises a number of sensors (41) arranged spatially separated, the signals of which are able to be fed to a common processing unit (43).

13. Pipeline system according to one of the preceding claims,
**characterised in that**
the sensor units (40) are disposed at predetermined distances between two access points (32) of the communication system, wherein a message transmitted from a sensor unit (40) to an access point (30) is transmitted via the intervening sensor units (40), wherein the message is forwarded by at least some of the intervening sensor units (40).

14. Pipeline system according to claim 13,
**characterised in that**
the access point (30) is arranged in the pumping and/or valve stations of the pipeline and supplied with energy by an energy supply of the pumping and/or valve station.

15. Pipeline system according to 13 or 14, **characterised in that**
the communication devices each comprise a transceiver unit, which is embodied to use a pulse width, pulse phase or pulse frequency modulation or FSK for communication, especially CSMA-CA or TDMA or Low Power Listening.

16. Method for operating a pipeline system, which comprises
- at least one electrically-conducting pipeline (10), which is connected to the ground and which is isolated from the ground;
- a cathode protection system (20), comprising a number of ground rods (21) arranged in the ground, which are connected electrically to the ground in each case and are coupled electrically to the pipeline (10);
- a communication system with a number of communication devices (30), wherein data is able to be transmitted via the pipeline (10) for communication between the communication devices;
in which
signals are detected by the communication devices (30) arranged along the pipeline and embodied as sensor units (40), wherein the sensor units (40) are supplied with energy from the cathode protection system (20).

## Revendications

1. Système de pipeline, comprenant
- au moins un pipeline électroconducteur (10) en contact avec le sol et isolé par rapport au sol ;
- un système de protection de cathodes
- un système de communication avec plusieurs dispositifs de communication (30), dans lequel des données sont transmissibles via le pipeline (10) pour une communication entre les dispositifs de communication (30) ;
**caractérisé en ce que** le système de protection de cathodes englobe un nombre de piquets de terre (21) disposés dans le sol, lesquels sont respectivement reliés électriquement avec le sol et couplés électriquement avec le pipeline (1), dans lequel les dispositifs de communication (30) englobent des unités de capteurs (40) disposées le long du pipeline (10), lesquelles sont alimentées en énergie au départ du système de protection de cathodes (20).

2. Système de pipeline selon la revendication 1, **caractérisé en ce que** les unités de capteurs (49) sont des unités de capteurs sismiques pour le captage de secousses sismiques.

3. Système de pipeline selon la revendication 1 ou 2, **caractérisé en ce que** les dispositifs de communication (30) sont alimentés en énergie au départ du système de protection de cathodes (20).

4. Système de pipeline selon l'une des revendications précédentes, **caractérisé en ce qu'**une unité d'alimentation en énergie (42) d'une unité de capteurs respective (40) est interconnectée électriquement entre un piquet de terre (21) affecté du système de protection de cathodes (20) et le pipeline (10), en particulier une bride du système de protection de cathodes (20) entourant le pipeline (10), dans lequel l'unité d'alimentation en énergie (42) permet de récupérer de l'énergie au départ d'une différence de tension entre le piquet de terre (21) et le pipeline (10) afin d'alimenter l'unité de capteurs (40).

5. Système de pipeline selon la revendication 4, **caractérisé en ce que** l'unité d'alimentation en énergie (42) englobe un accumulateur d'énergie pour l'alimentation temporaire en énergie de l'unité de capteurs (40), en particulier durant la transmission d'un message à un autre dispositif de communication (30), dans lequel l'accumulateur d'énergie est chargeable au départ du système de protection de cathodes (20).

6. Système de pipeline selon l'une des revendications précédentes, **caractérisé en ce qu'**une unité de capteurs respective (40) englobe une unité de traitement (43) pour le traitement d'un signal résultant d'une secousse sismique, laquelle détermine au départ du signal des vecteurs caractéristiques et les classifie, à l'aide d'une comparaison, selon des données de référence enregistrées dans l'unité de capteurs, dans lequel l'unité de capteurs (40) envoie un message d'alarme en présence d'une classification comme événement critique.

7. Système de pipeline selon la revendication 6, **caractérisé en ce que** l'unité de traitement (43) est exécutée afin d'échantillonner le signal de l'unité de capteurs (40) selon une fréquence d'échantillonnage de 100 Hz.

8. Système de pipeline selon la revendication 6 ou 7, **caractérisé en ce que** pour la détermination des vecteurs caractéristiques par l'unité de traitement (43), une transformation de Fourier est applicable sur au moins un vecteur d'échantillonnage du signal échantillonné avec un nombre donné d'échantillons par fenêtre d'échantillonnage, en particulier avec différentes tailles de fenêtre d'échantillonnage.

9. Système de pipeline selon la revendication 6 ou 7, **caractérisé en ce que** pour la détermination des vecteurs caractéristiques par l'unité de traitement (43), une transformation de Wavelet est applicable au signal échantillonné.

10. Système de pipeline selon la revendication 8 ou 9, **caractérisé en ce que** l'unité de traitement (43) peut comparer les coefficients de Fourier ou Wavelet normalisés résultants aux coefficients de référence enregistrés dans l'unité de capteurs (40).

11. Système de pipeline selon l'une des revendications précédentes, **caractérisé en ce qu'**un capteur de l'unité de capteurs (40) est exécuté afin de détecter des fréquences maximales de 10 Hz.

12. Système de pipeline selon l'une des revendications précédentes, **caractérisé en ce qu'**une unité de capteurs (40) englobe plusieurs capteurs (41) séparés spatialement, dont les signaux sont acheminables vers une unité de traitement commune (43).

13. Système de pipeline selon l'une des revendications précédentes, **caractérisé en ce que** les unités de capteurs (40) sont disposées selon des écartements prédéterminés entre deux noeuds d'entrée (32) du système de communication, dans lequel un message transmis d'une unité de capteurs (40) à l'un des noeuds d'entrée (30) est transmise via les unités de capteurs (40) situées dans l'intervalle, au moins certaines des unités de capteurs (40) situées dans l'intervalle opérant une transmission du message.

14. Système de pipeline selon la revendication 13, **caractérisé en ce que** les noeuds d'entrée (30) sont disposés dans des stations de pompage et/ou de vannes du pipeline et alimentés en énergie via une alimentation en énergie de la station de pompage et/ou de vannes.

15. Système de pipeline selon la revendication 13 ou 14, **caractérisé en ce que** les dispositifs de communication englobent respectivement une unité d'émission/réception exécutées afin d'utiliser pour la communication une modulation d'impulsions en fréquence, en phase, dans le temps ou FSK, en particulier CSMA-CA, TDMA ou Low Power Listening.

16. Procédé d'exploitation d'un système de pipeline qui englobe au moins un pipeline électroconducteur (10) en contact avec le sol et isolé par rapport au sol ; un système de protection de cathodes (20) qui englobe un nombre de piquets de terre (21) disposés dans le sol, lesquels sont respectivement reliés électriquement avec le sol et couplés électriquement avec le pipeline (10) ; un système de communication avec plusieurs dispositifs de communication (30), dans lequel des données sont transmissibles via le pipeline (10) pour une communication entre les dispositifs de communication ; dans lequel les dispositifs de communication (30) exécutés sous forme d'unités de capteurs (40) et disposés le long du pipeline captent des signaux, les unités de capteurs (40) étant alimentées en énergie au départ du système de protection de cathodes (20).
